# EUROPÄISCHE PATENTSCHRIFT

(11) **EP 4 402 084 B1**
(45) Veröffentlichungstag und Bekanntmachung des Hinweises auf die Patenterteilung: **14.05.2025**
(21) Anmeldenummer: 22782830.8
(22) Anmeldetag: 14.09.2022
(51) Int. Cl.: B65H 75/44, B60L 53/30, B60L 53/18, H02G 11/02

(54) **TROMMELANORDNUNG**
REEL ARRANGEMENT
AGENCEMENT DE DÉVIDOIR

(30) Priorität: 15.09.2021 DE 102021123843
(43) Veröffentlichungstag der Anmeldung: 24.07.2024
(73) Patentinhaber: Stemmann-Technik GmbH, 48465 Schüttorf (DE)
(72) Erfinder: BOLLEN, Henning, 48465 Schüttorf (DE); BOLLE, Daniel, 48465 Samern (DE); BRIESCHKE-GRONAU, Thomas, 49477 Ibbenbüren (DE)
(74) Vertreter: Griepenstroh, Jörg
(86) Internationale Anmeldenummer: PCT/DE2022/100685
(87) Internationale Veröffentlichungsnummer: WO 2023/041117

(56) Entgegenhaltungen:
- DE-A1- 2 900 187
- DE-C2- 2 159 496

## Beschreibung

Die Erfindung betrifft eine Trommelanordnung gemäß den Merkmalen des Patentanspruches 1.

Es sind Trommelanordnungen zur wickelnden Aufnahme von elektrischen Leitungen bekannt, bei welchen die elektrische Energie über Schleifringe in die rotierende Trommelanordnung übertragen wird. Oftmals sind die Schleifringkörper ein limitierender Faktor für die Übertragung einer elektrischen Leistung, insbesondere zum Laden von Elektrofahrzeugen jeglicher Art.

Der Erfindung liegt die Aufgabe zugrunde, eine Trommelanordnung aufzuzeigen, bei welcher die Limitierung durch Schleifringkörper entfällt, insbesondere um höhere Ladeleistungen zu übertragen.

Die DE 21 59 496 C2 offenbart eine Trommelanordnung nach dem Oberbegriff des Anspruchs 1, zum Auf- oder Abwickeln eines Versorgungskabels für höhenverstellbare Leuchten. Die Kabelaufwickelvorrichtung weist eine Doppeltrommel mit einer ersten und einer zweiten Teiltrommel auf, von denen die zweite Teiltrommel einen wesentlich kleineren Durchmesser hat als die erste. Das Versorgungskabel wird von einem feststehenden Anschluss aus zunächst um die kleinere, zweite Teiltrommel geführt, dann um die erste Teiltrommel und zu der Leuchte. Die Doppeltrommel wird von einem Stellmotor angetrieben, so dass die Auf- bzw. Abwickelgeschwindigkeit des Kabels von der größeren, ersten Teiltrommel gleich der Höhenverstellgeschwindigkeit der Leuchte am Hänger ist.

Die DE 29 00 187 A1 offenbart eine Wickelvorrichtung zum Auf- und Abwickeln von Leitungen. Die Wickelvorrichtung weist mehrere spiralig wickelnde Leitungsbereiche in getrennten Wickelräumen auf einer einzigen Wickeltrommel auf. Von einem feststehenden Anschluss führt ein elektrisches Zuleitungskabel zu der Wickeltrommel. Ein Ableitungskabel dient zur Verbindung mit einem beweglichen Anschluss. Die trommelseitigen Enden der elektrischen Zuleitungs- und Ableitungskabel sind unmittelbar einander verbunden. In gleicher Weise sind ein oder mehrere Pneumatik- bzw. Hydraulikleitung auf der Wickeltrommel angeordnet.

Die Aufgabe wird durch eine Trommelanordnung mit den Merkmalen des Patentanspruches 1 gelöst.

Die Unteransprüche betreffen vorteilhafte Weiterbildungen der Erfindung.

Die erfindungsgemäße Trommelanordnung verzichtet komplett auf eine Schleifringanordnung. Es handelt sich um eine schleifringlose Trommelanordnung. Die Trommelanordnung besitzt eine Haupttrommel und eine Nebentrommel auf einer gemeinsamen Trommelachse. Die Haupttrommel und die Nebentrommel werden synchron, d.h. stets in dieselbe Drehrichtung und mit derselben Drehgeschwindigkeit bewegt. Insbesondere sind die Haupttrommel und die Nebentrommel miteinander verbunden.

Die Trommelanordnung umfasst eine aufzuwickelnde Leitung. Die Leitung besitzt ein erstes ortsfestes Leitungsende. Die Leitung verläuft von dort kommend zunächst über eine Leitungsschlaufe zu der Nebentrommel, um dort auf- und abgewickelt zu werden. Die Leitung wird im weiteren Verlauf zur Haupttrommel geleitet. Sie ist an der Haupttrommel und/oder der Nebentrommel befestigt. Die Leitung kann über die Haupttrommel auf- und abgewickelt werden, so dass ihr freies Ende an einen Anschluss angeschlossen werden kann, beispielsweise an ein Elektrofahrzeug.

Die Trommelanordnung ist so ausgebildet, dass die Nebentrommel einen kleineren Wickeldurchmesser als die Haupttrommel aufweist. Die erfindungsgemäße Trommelanordnung wird derart verwendet, dass die Leitung schleifringlos zunächst zur Nebentrommel geführt wird und dort von radial außen kommend aufgewickelt wird. Die Wicklung der Haupttrommel und/oder der Nebentrommel kann spiralig oder wendelförmig sein. Auf die Nebentrommel wird eine erste Leitungslänge der Leitung gewickelt. Der Wickeldurchmesser der Haupttrommel, zu der dieselbe Leitung anschließend geführt wird, ist jedoch größer als der Wickeldurchmesser der Nebentrommel. Das bedeutet, dass bei einer gleichen Anzahl von Drehungen der Trommeln eine größere Leitungslänge auf der Haupttrommel aufgewickelt wird als auf der Nebentrommel. Da die Leitungslänge auf der Nebentrommel zudem durch die fixierte Leitungsschlaufe begrenzt ist, wird beim Abwickeln der Trommeln zwar die Leitungsschlaufe vergrößert, jedoch gleichzeitig ein wesentlich längerer Leitungsabschnitt von der Haupttrommel abgewickelt.

Eine solche Trommelanordnung kommt vollkommen ohne Schleifringübertrager aus. Die Ladeleistung ist daher auch nicht durch Schleifringkörper limitiert. Der limitierende Faktor liegt einzig in der Ladeinfrastruktur und ggf. in der maximal aufwickelbaren Kabellänge. Es wird zwar eine gewisse Länge der Leitung für die Nebentrommel benötigt, allerdings ist diese Länge gerade bei größeren Unterschieden der Wickeldurchmesser vergleichsweise gering im Verhältnis zu der von der Haupttrommel abwickelbaren Leitungslänge. Ein weiterer Vorteil der erfindungsgemäßen Trommelanordnung ist es, dass auf eine einheitliche Leitung von einem Ende zum anderen Ende der aufzuwickelnden Leitung der Trommelanordnung zurückgegriffen werden kann. Es sind keine Schnittstellen zwischen der sich drehenden Trommel und einer ortsfesten Installation notwendig.

Die Nebentrommel ist spiralig wickelnd und die Haupttrommel ist zylindrisch wickelnd ausgeführt. Eine spiralig wickelnde Nebentrommel besitzt in Axialrichtung eine sehr geringe Breite, die nur wenig größer ist als der Durchmesser der Leitung. Eine solche Nebentrommel kann ausgesprochen platzsparend unmittelbar neben der Haupttrommel angeordnet werden. Da die Haupttrommel ohnehin einen größeren Wickeldurchmesser hat, kann die im Durchmesser daher auch größere stirnseitige Trommelwand gleichzeitig als Trommelwand für die Nebentrommel genutzt werden.

Die beiden Trommeln sind daher vorzugsweise unmittelbar nebeneinander angeordnet. Die Nebentrommel ist insbesondere unmittelbar mit der Haupttrommel verbunden. Das hat zudem den Vorteil, dass nur wenig Leitungslänge benötigt wird, um die Leitung von der Nebentrommel zur Haupttrommel zu führen. Die Leitung wird radial innen in dem Trommelkörper der Nebentrommel aufgenommen und wird von dort zur Haupttrommel geleitet, wo sie insbesondere zylindrisch wickelnd geführt ist.

Die Kabelschlaufe steht für einen ordnungsgemäßen Wickelvorgang unter dem Einfluss einer Spannkraft, die gegen die Wickelrichtung der Nebentrommel gerichtet ist. Mit anderen Worten zieht die Spannkraft derart an der Leitungsschlaufe, dass die Leitung stets ordnungsgemäß spiralig gewickelt wird. Die Leitungsschlaufe steht unter dem Einfluss einer schwerkraftbedingten Spannkraft. Die Leitungsschlaufe wird durch einen Gewichtskörper, der an der Leitungsschlaufe hängt, direkt vertikal nach unten gezogen. Ein solcher Gewichtskörper ist in Längsrichtung der Leitung verschiebbar mit der Leitungsschlaufe verbunden. Es kann sich hierüber um einen Rollenblock handeln, der über die Leitung abrollt und stets am tiefsten Punkt der Leitungsschlaufe hängt.

Die erfindungsgemäße Trommelanordnung ist vorzugsweise derart ausgebildet, dass ein Leitungsabschnitt auf der Nebentrommel eine kleinere Wickellänge als ein Leitungsabschnitt auf der Haupttrommel aufweist, so dass sich beim Abwickeln der Haupttrommel in eine erste Drehrichtung die Wickelrichtung auf der Nebentrommel umkehrt. Die Trommelanordnung wird daher insbesondere derart verwendet, dass zum Abwickeln in eine erste Drehrichtung z.B. gegen den Uhrzeigersinn sowohl die Leitung von der Haupttrommel als auch die Leitung von der Nebentrommel abgewickelt werden. Die abgewickelten Leitungsbereiche befinden sich jeweils auf der in Drehrichtung weisenden Seite der beiden Trommeln. Wenn nun der kürzere Leitungsabschnitt auf der Nebentrommel komplett abgewickelt worden ist und beide Trommeln weiter bewegt werden, wird der Leitungsabschnitt, der mit der Nebentrommel verbunden ist, auf die andere Seite gezogen, so dass sich die Leitung auf der Nebentrommel bei gleichbleibender Drehrichtung nun nicht mehr abwickelt, sondern wieder aufwickelt. Es gibt also beim reinen Abwickeln der Haupttrommel zwei Wickelphasen auf der Nebentrommel, nämlich eine erste Phase, in der auch die Nebentrommel abgewickelt wird und anschließend eine zweite Phase, in der die Leitung auf die Nebentrommel wieder aufgewickelt wird. Dieser Aufwickelvorgang kann nur solange fortgesetzt werden, bis die Leitungsschlaufe ihre kürzeste Länge erreicht hat. Vorzugsweise sind die Wickeldurchmesser der Haupttrommel und der Nebentrommel so aufeinander abgestimmt, dass bei vollständig aufgewickelter und bei vollständig abgewickelter Haupttrommel der Leitungsabschnitt auf der Nebentrommel jeweils vollkommen aufgewickelt ist. Der Unterschied besteht allerdings darin, dass zum Erreichen der vollkommen abgewickelten Haupttrommel die zweite Wickelphase zuletzt durchlaufen werden muss und zum Erreichen der vollkommen aufgewickelten Haupttrommel die erste Wickelphase des nebentrommelseitigen Wickelvorganges als letzte durchlaufen werden muss.

Die Trommelanordnung ist insbesondere mit einem Antrieb versehen, der mit der Haupttrommel und/oder der Nebentrommel verbunden ist und über die eine Trommel die jeweils andere Trommel antreibt. Der Antrieb ist dazu eingerichtet, die Haupttrommel und die Nebentrommel gleichzeitig zu drehen. Es kann sich insbesondere um einen innen liegenden Antrieb innerhalb der Trommelanordnung handeln, wobei insbesondere innerhalb der Haupttrommel aufgrund des großen Wickeldurchmessers hinreichend Bauraum zur Aufnahme eines Antriebs zur Verfügung steht. Der Antrieb wird auf einer feststehenden Achse montiert. Wie vorstehend erwähnt, ist es besonders zweckmäßig, die Haupttrommel und die Nebentrommel unmittelbar nebeneinander anzuordnen und auch direkt miteinander zu verbinden, so dass die Antriebskraft von einer Trommel auf die andere übertragen wird.

Die Leitung dient insbesondere zur Übertragung elektrischer Energie an einen mobilen Verbraucher. Die Trommelanordnung umfasst insbesondere eine Aufhängung, die derart eingerichtet ist, dass die Trommelanordnung bevorzugt oberhalb eines mobilen Verbrauchers aufhängbar ist, um ein Leitungsende von oben kommend zum Verbraucher herab zu lassen. Hochhängende Trommelanordnungen ermöglichen es, störende Leitungsenden vom Boden fern zu halten. Das verhindert ein Überfahren und Beschädigen von Steckern und erleichtert das Rangieren. Zudem kann der Leitungsabschnitt der Leitungsschlaufe frei nach unten geführt werden. Die erfindungsgemäße Trommelanordnung befindet sich daher vorzugsweise in einer solchen Höhe, in welcher die Leitungsschlaufe frei nach unten hängen kann.

Die Trommelanordnung ist nicht auf einen bestimmten Leitungstyp beschränkt. Eine Leitung im Sinne der Erfindung kann eingerichtet sein zur Durchleitung von Energie und/oder Signalen und/oder Fluiden, z.B. Gasen, Flüssigkeiten, fließfähigen Feststoffen und/oder von Gemischen von Fluiden und/oder Feststoffen. Auch Hybridleitungen sind möglich, die mehrere Leitungen für unterschiedliche Leitungszwecke aufweisen, beispielsweise eine Datenleitung und eine Leitung zur Energieübertragung. Auch können mehrere Leitungen zu einer Leitung im Sinne der Erfindung miteinander verbunden werden, beispielsweise ein Leitungspaar, das als solches auch optisch als Leitungspaar zur erkennen ist. Der Begriff Leitung bedeutet nicht zwangsläufig, dass ein bestimmter Stoff von einem Ende zum anderen Ende geleitet werden muss, um dort wieder aus der Leitung auszutreten. Es kann sich auch um gekühlte Leitungen handeln, bei denen beispielsweise ein Kühlmittel einen elektrischen Leiter kühlt und am Leitungsbeginn sowohl eintritt und austritt.

Die erfindungsgemäßen Trommelanordnungen können überall dort eingesetzt werden, wo ein kurzzeitiges Durchhängen der Anschlussleitung bzw. der Leitungsschlaufe kein Problem darstellt. Ein möglicher Anwendungsbereich wären beispielsweise Trommelanordnungen für besondere Kommunikationsarten bis hin zur Lichtwellenleiteraufwicklung. Bevorzugt wird eine solche Trommelanordnung für Elektroleitungen zum Laden eines Elektrofahrzeuges verwendet.

Die Erfindung wird nachfolgend anhand von Zeichnungen erläutert. Die Zeichnungen sind rein schematisch und nicht maßstäblich. Sie dienen lediglich zur Verdeutlichung des Funktionsprinzips. Es zeigen:
- Figur 1: eine perspektivische Ansicht einer Trommelanordnung;
- Figur 2: die Trommelanordnung der Figur 1 in einem Querschnitt;
- Figur 3: die Trommelanordnung der Figur 1 aus einer anderen Perspektive;
- Figur 4: die Trommelanordnung der Figur 3 während des Abwickelns;
- Figur 5: die Trommelanordnung der Figur 3 im abgewickelten Zustand;
- Figur 6: einen Querschnitt durch die Trommelanordnung der Figur 1 in einer ersten Wickelphase;
- Figur 7: die Trommelanordnung der Figur 6 im Übergang von der ersten zur zweiten Wickelphase und
- Figur 8: die Trommelanordnung der Figur 6 in einer zweiten Wickelphase.

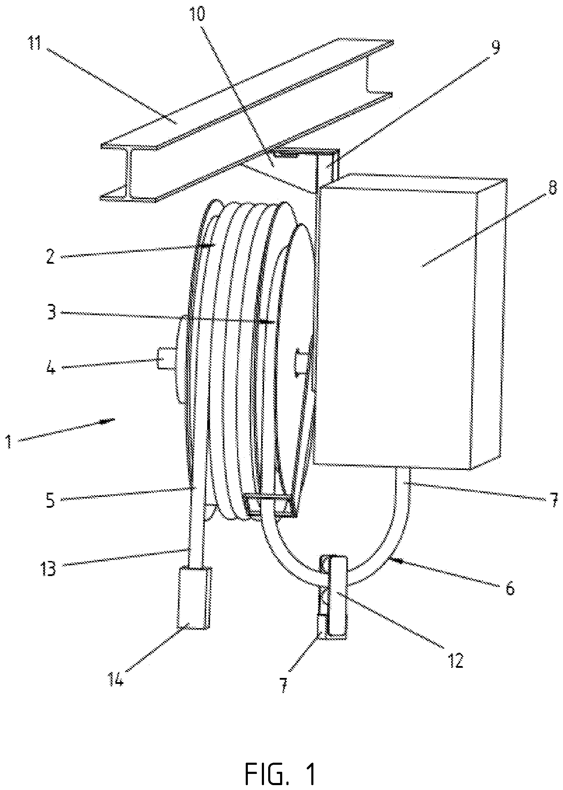

Die Figur 1 zeigt eine Trommelanordnung 1 mit einer Haupttrommel 2 und einer Nebentrommel 3. Die Haupttrommel 2 und die Nebentrommel 3 sind miteinander verbunden und auf einer gemeinsamen Trommelachse 4 gelagert. Die Trommelachse 4 ist horizontal angeordnet. Die Trommelanordnung 1 trägt eine aufzuwickelnde Leitung 5. Es handelt sich um eine elektrische Leitung zum Laden eines Kraftfahrzeuges. Die Leitung umfasst eine Leitungsschlaufe 6 mit einem ortsfesten ersten Leitungsende 7, das benachbart zur Nebentrommel 3 in einen Anschlusskasten 8 mündet. Der Anschlusskasten 8 und die Trommelachse 4 sind mit einer Aufhängung 9 verbunden, die zwischen dem Anschlusskasten 8 und der Trommelachse 4 angeordnet ist. Oberhalb der Trommelanordnung 1 besitzt die Aufhängung 9 einen horizontalen Tragarm 10, der mit einem Horizontalträger 11 verbunden ist. Der Tragarm 10 kann ortsfest mit dem Horizontalträger 11 verbunden sein. Es ist möglich, den Tragarm 10 in Längsrichtung des Horizontalträgers 11 verschiebbar anzuordnen, um die Trommelanordnung 1 in die gewünschte Position zu bringen.

Die Leitungsschlaufe 6 hängt nach unten und wird durch den Gewichtskörper 7 nach unten gezogen. Wenn die Leitungsschlaufe 6 verlängert wird, wird der Gewichtskörper 7 in eine andere Position verlagert, und zwar immer zum tiefsten Punkt der Leitungsschlaufe 6. Hierfür sorgt ein Rollenblock 12, der einerseits den Gewichtskörper 7 trägt und andererseits in Längsrichtung auf der Leitungsschlaufe 6 abrollt. Die Leitung 5 erstreckt sich von dem ersten Leitungsende 7 über die Leitungsschlaufe 6 zunächst zur Nebentrommel 3 und über einen radial inneren Weg von der Nebentrommel 3 zur Haupttrommel 4 bis zum zweiten Leitungsende 13 mit einem Stecker 14. Nachfolgend wird das Funktionsprinzip erläutert.

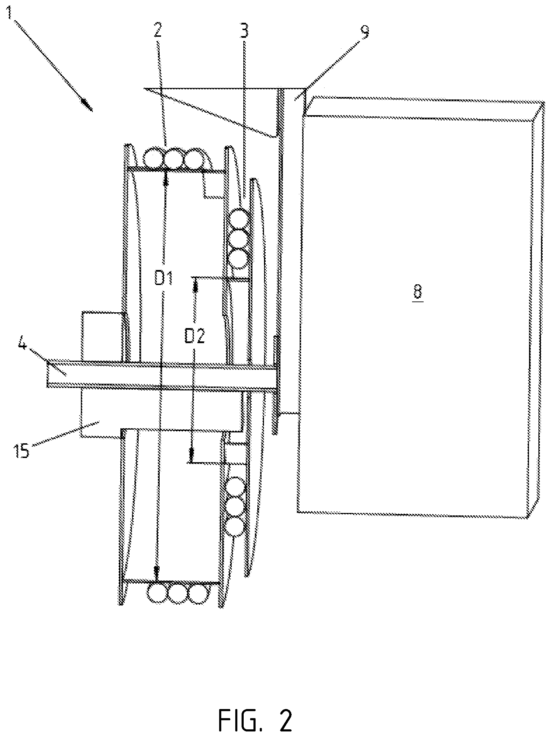

Die Figur 2 zeigt einen Längsschnitt durch die Trommelanordnung der Figur 1 im Bereich der Trommelachse 4. Die Nebentrommel 3 nimmt die Leitung 5 spiralig wickelnd auf. Anschließend wird die Leitung 5 zu der zylindrisch wickelnden Haupttrommel 2 geleitet. Ein Antrieb 15 ist auf der Trommelachse 4 befestigt und dient dazu, die Trommelanordnung 1 in Bewegung zu setzen. Es handelt sich um einen elektrischen Antrieb, über den die Haupttrommel 2 und die Nebentrommel 3 gelagert sind.

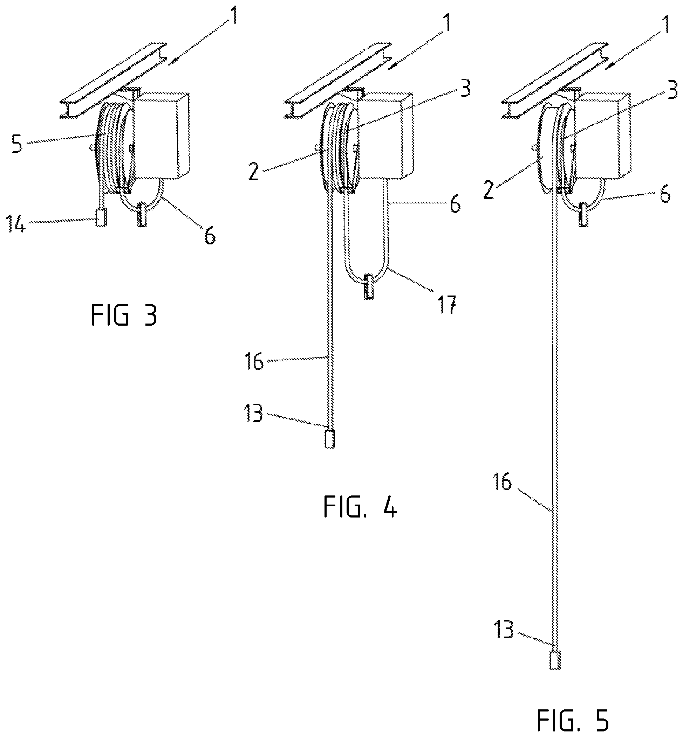

Wesentlich für die Erfindung ist, dass die Haupttrommel 2 einen Wickeldurchmesser D1 aufweist, der größer ist als der Wickeldurchmesser D2 der Nebentrommel 3. Auch wenn der Wickeldurchmesser D2 der Nebentrommel 3 aufgrund der spiraligen Wickelung mit zunehmender Anzahl der Wicklungen größer wird, ist er doch in keinem Fall so groß, wie der Wickeldurchmesser D1 der Haupttrommel 2. Das bedeutet, dass bei einer Umdrehung der Haupttrommel 2 immer ein größerer Leitungsabschnitt abgewickelt wird als von der Nebentrommel 3. Dieses Prinzip wird nachfolgend anhand der Figuren 3 bis 8 erläutert.

Die Figur 3 zeigt die Ausgangsposition, wie sie in den Figuren 1 und 2 dargestellt ist. Die Leitung 5 ist vollständig aufgewickelt. Die Leitungsschlaufe 6 ist so kurz wie möglich. Der Stecker 14 befindet sich in seiner oberen Endlage.

Nun wird der Antrieb 15 betätigt und dreht die Trommelanordnung 1 gegen den Uhrzeigersinn gedreht, so dass ein Leitungsabschnitt 16 von der Haupttrommel 2 abgewickelt wird. Gleichzeitig verlängert sich die Leitungsschlaufe 6, weil auch die Nebentrommel 3 abgewickelt wird. Der Leitungsabschnitt 17, der von der Nebentrommel 3 abgewickelt wurde, ist aufgrund des geringeren Wickeldurchmessers D2 kürzer als der Leitungsabschnitt 16 von der Haupttrommel 3.

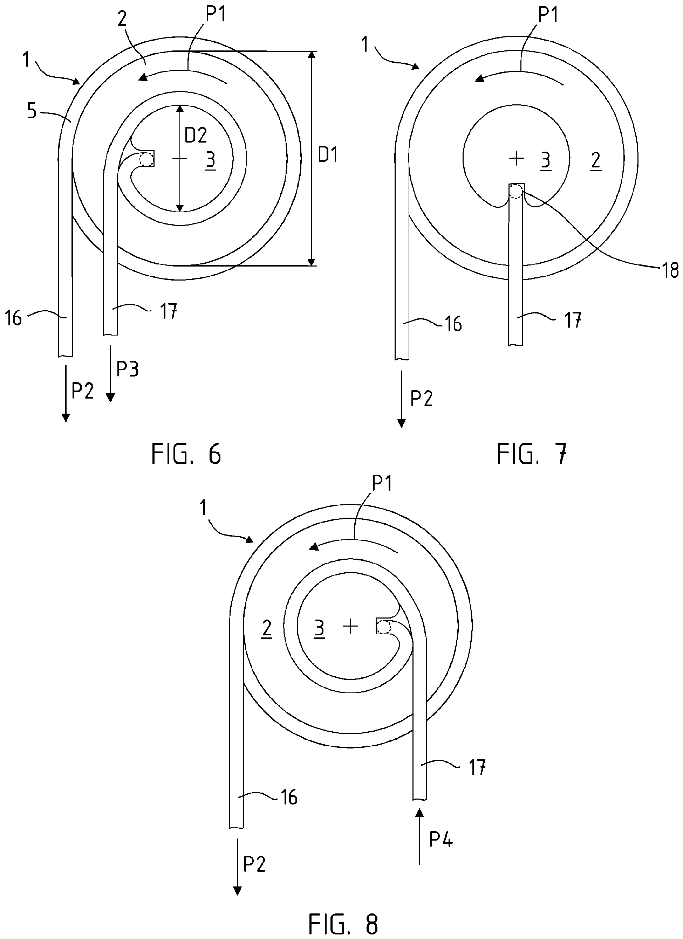

Wenn nun das zweite Leitungsende 13 weiter abgewickelt wird (Figur 5), bis es die dort dargestellte Endposition erreicht, wird die Leitungsschlaufe 6 wieder auf ihre ursprüngliche Leitungslänge verkürzt. Das ist darauf zurückzuführen, dass der Leitungsabschnitt 17 auf der Nebentrommel 3 eine kleinere Wickellänge aufweist als der Leitungsabschnitt 16 auf der Haupttrommel 2. Dadurch kehrt sich beim Abwickeln der Haupttrommel 2 in eine erste Drehrichtung die Wickelrichtung auf der Nebentrommel 3 ab einem bestimmten Punkt um. Die Figuren 6 bis 8 verdeutlichen dieses Prinzip.

Die Figur 6 ist eine Seitenansicht der Trommelanordnung 1 in stark vereinfachter Darstellung. Die Nebentrommel 3 ist dem Betrachter zugewandt, die Haupttrommel liegt dahinter. Die Nebentrommel 3 besitzt den kleineren Wickeldurchmesser D2. Die Haupttrommel 2 besitzt den größeren Wickeldurchmesser D1.

Die Leitung 5 wird in Drehrichtung des Pfeils P1 gegen den Uhrzeigersinn von der Haupttrommel 2 abgewickelt. Der Pfeil P2 zeigt, wie das Leitungsende 16 der Leitung 5 nach unten abgewickelt wird. Gleichzeitig wird auch der Leitungsabschnitt 17 der Nebentrommel 3 abgewickelt. Der Pfeil P3 am Leitungsabschnitt 17 weist in dieselbe Richtung wie der Pfeil P2.

Die Figur 7 zeigt eine Position der Nebentrommel 3, bei welcher ein radial innerer Leitungsanschluss 18, der an der Nebentrommel 3 angeordnet ist, radial nach unten weist. In dieser Position ist die Leitung 5 bzw. der Leitungsabschnitt 17 nicht auf die Nebentrommel 3 gewickelt. Die Schlaufe, zu der der Leitungsabschnitt 17 zählt, besitzt ihre maximale Länge. In dieser Position ist die erste Wickelphase der Nebentrommel 3 abgeschlossen. Nach diesem Umkehrpunkt beginnt die zweite Wickelphase, wie sie in Figur 8 dargestellt ist. Die Trommelanordnung 1 wird weiterhin in Richtung des Pfeils P1 gedreht, so dass der Leitungsanschluss 18 in der Bildebene nach rechts verlagert wird und nunmehr der Leitungsabschnitt 17 gegensinnig zum Leitungsabschnitt 16 gewickelt wird bzw. gewickelt ist. Der Pfeil P4, der die Bewegungsrichtung des Leitungsabschnittes 17 anzeigt, weist dementsprechend zur Trommelanordnung 1 und nicht, wie der Pfeil P3 in Figur 6, von der Trommelanordnung 1 weg. Der Leitungsabschnitt 16 der Haupttrommel 2 wird weiterhin abgewickelt, während der Leitungsabschnitt 17 der Nebentrommel 3 aufgewickelt wird, bis die Position der Figur 5 erreicht wird.

Das Aufwickeln der Haupttrommel 2 erfolgt dementsprechend in umgekehrter Reihenfolge. Die Richtungen aller Pfeile in den Figuren 6 bis 8 kehren sich dementsprechend um.

### Bezugszeichen:

- 1 -: Trommelanordnung
- 2 -: Haupttrommel
- 3 -: Nebentrommel
- 4 -: Trommelachse
- 5 -: Leitung
- 6 -: Leitungsschlaufe
- 7 -: erstes Leitungsende
- 8 -: Anschlusskasten
- 9 -: Aufhängung
- 10 -: Tragarm
- 11 -: Horizontalträger
- 12 -: Rollenblock
- 13 -: zweites Leitungsende
- 14 -: Stecker
- 15 -: Antrieb
- 16 -: Leitungsabschnitt der Haupttrommel
- 17 -: Leitungsabschnitt der Nebentrommel
- 18 -: Leitungsanschluss
- D1: Wickeldurchmesser der Haupttrommel
- D2: Wickeldurchmesser der Nebentrommel
- P1: Drehrichtung
- P2: Bewegungsrichtung von 16
- P3: Bewegungsrichtung von 17
- P4: Bewegungsrichtung von 17

## Patentansprüche

1. Trommelanordnung (1) mit einer Haupttrommel (2) und einer Nebentrommel (3) auf einer gemeinsamen Trommelachse (4) und mit einer aufzuwickelnden Leitung (5), wobei die Leitung (5) von einem ortsfesten ersten Leitungsende (7) über eine Leitungsschlaufe (6) zu der Nebentrommel (3) verläuft, um dort auf- und abgewickelt zu werden, wobei die Leitung (5) anschließend zur Haupttrommel (2) geleitet wird und an der Haupttrommel (2) und/oder der Nebentrommel (3) befestigt ist, wobei die Nebentrommel (3) einen kleineren Wickeldurchmesser (D2) als die Haupttrommel (2) aufweist, wobei die Leitungsschlaufe (6) unter dem Einfluss einer schwerkraftbedingten Spannkraft steht, die gegen die Wickelrichtung der Nebentrommel (3) gerichtet ist, **dadurch gekennzeichnet, dass** zur Erzeugung der Spannkraft ein Gewichtskörper (7) in Längsrichtung der Leitung (7) verschiebbar mit der Leitungsschlaufe verbunden ist, wobei die Nebentrommel (3) spiralig wickelnd ist und die Haupttrommel (2) zylindrisch wickelnd ist, wobei die Spannkraft derart an der Leitungsschlaufe (6) zieht, dass die Leitung (5) stets ordnungsgemäß spiralig gewickelt wird.

2. Trommelanordnung (1) nach Anspruch 1, **dadurch gekennzeichnet, dass** ein Leitungsabschnitt (17) auf der Nebentrommel (3) eine kleinere Wickellänge als ein Leitungsabschnitt (16) auf der Haupttrommel (2) aufweist, so dass sich beim Abwickeln der Haupttrommel (2) in eine erste Drehrichtung (P1) die Wickelrichtung auf der Nebentrommel (3) umkehrt.

3. Trommelanordnung (1) nach Anspruch 2, **dadurch gekennzeichnet, dass** die Wickeldurchmesser (D1,D2) so eingerichtet sind, dass bei vollständig aufgewickelter Haupttrommel (2) und bei vollständig abgewickelter Haupttrommel (2) der Leitungsabschnitt (17) auf der Nebentrommel (3) jeweils vollkommen aufgewickelt ist.

4. Trommelanordnung (1) nach einem der Ansprüche 1 bis 3, **dadurch gekennzeichnet, dass** ein Antrieb (15) mit der Haupttrommel (2) und/oder der Nebentrommel (3) verbunden ist, der dazu eingerichtet ist, die Haupttrommel (2) und die Nebentrommel (3) zu drehen.

5. Trommelanordnung (1) nach einem der Ansprüche 1 bis 4, **dadurch gekennzeichnet, dass** die Nebentrommel (3) und die Haupttrommel (2) unmittelbar nebeneinander angeordnet sind.

6. Trommelanordnung (1) nach einem der Ansprüche 1 bis 5, **dadurch gekennzeichnet, dass** die Leitung (5) zur Übertragung elektrischen Energie zu einem mobilen Verbraucher ausgebildet ist.

7. Trommelanordnung (1) nach einem der Ansprüche 1 bis 6, **gekennzeichnet durch**, eine zur Aufhängung (9), die derart eingerichtet ist, dass die Trommelanordnung (1) oberhalb eines mobilen Verbrauchers aufhängbar ist, um ein Leitungsende (13) von oben kommend zum Verbraucher herabzulassen.

8. Trommelanordnung (1) nach einem der Ansprüche 1 bis 7, **dadurch gekennzeichnet, dass** die Leitung (5) eingerichtet ist zur Durchleitung von Energie und/oder Signalen und/oder Fluiden, nämlich Gasen, Flüssigkeiten, fließfähigen Feststoffen und/oder von Gemischen von Fluiden und/oder Feststoffen.

9. Trommelanordnung (1) nach einem der Ansprüche 1 bis 8, **dadurch gekennzeichnet, dass** die Leitung (5) eine Hybridleitung ist mit mehrere Leitungsbereichen für unterschiedliche Leitungszwecke.

10. Verwendung einer Trommelanordnung (1) nach einem der Ansprüche 1 bis 9 für eine Elektroleitung zum Laden eines Elektrofahrzeuges.

## Claims

1. A reel arrangement (1) with a main reel (2) and a secondary reel (3) on a common reel axis (4) and with a cable (5) to be wound up, wherein the cable (5) runs from a stationary first cable end (7) via a cable loop (6) to the secondary reel (3) in order to be wound up and unwound there, wherein the cable (5) is then guided to the main reel (2) and is fastened to the main reel (2) and/or the secondary reel (3), the secondary reel (3) has a smaller winding diameter (D2) than the main reel (2), wherein the cable loop (6) is under the influence of a gravity-induced tensioning force directed against the winding direction of the secondary reel (3), **characterized in that**, to generate the tensioning force, a weight body (7) is connected to the cable loop so as to be displaceable in the longitudinal direction of the cable (7), wherein the secondary reel (3) is spirally wound and the main reel (2) is cylindrically wound, wherein the tensioning force pulls on the cable loop (6) in such a way that the cable (5) is always properly spirally wound.

2. The reel arrangement (1) according to claim 1, **characterized in that** a cable portion (17) on the secondary reel (3) has a smaller winding length than a cable portion (16) on the main reel (2), so that when the main reel (2) is unwound in a first direction of rotation (P1), the winding direction on the secondary reel (3) is reversed.

3. The reel arrangement (1) according to claim 2, **characterized in that** the winding diameters (D1, D2) are arranged such that when the main reel (2) is completely wound up and when the main reel (2) is completely unwound, the cable portion (17) is completely wound up on the secondary reel (3).

4. The reel arrangement (1) according to any one of claims 1 to 3, **characterized in that** a drive (15) is connected to the main reel (2) and/or the secondary reel (3), which drive is configured to rotate the main reel (2) and the secondary reel (3).

5. The reel arrangement (1) according to any one of claims 1 to 4, **characterized in that** the secondary reel (3) and the main reel (2) are disposed directly next to one another.

6. The reel arrangement (1) according to any one of claims 1 to 5, **characterized in that** the cable (5) is configured to transmit electrical energy to a mobile consumer.

7. The reel arrangement (1) according to any one of claims 1 to 6, **characterized by** a suspension (9) which is configured such that the reel arrangement (1) can be suspended above a mobile consumer in order to lower a cable end (13) coming from above to the consumer.

8. The reel arrangement (1) according to any one of claims 1 to 7, **characterized in that** the cable (5) is configured to conduct energy and/or signals and/or fluids, namely gases, liquids, flowable solids and/or mixtures of fluids and/or solids.

9. The reel arrangement (1) according to any one of claims 1 to 8, **characterized in that** the cable (5) is a hybrid cable with several cable areas for different cable purposes.

10. Use of a reel arrangement (1) according to any one of claims 1 to 9, for an electrical cable for charging an electric vehicle.

## Revendications

1. Agencement de dévidoir (1) avec un dévidoir principal (2) et un dévidoir secondaire (3) sur un axe de dévidoir commun (4) et avec une ligne (5) à enrouler, dans lequel la ligne (5) s'étend d'une première extrémité (7) de ligne fixe par une boucle de ligne (6) jusqu'au dévidoir secondaire (3) pour y être enroulée et déroulée, dans lequel la ligne (5) est ensuite acheminée jusqu'au dévidoir principal (2) et est fixée sur le dévidoir principal (2) et/ou le dévidoir secondaire (3), dans lequel le dévidoir secondaire (3) présente un diamètre d'enroulement (D2) plus petit que le dévidoir principal (2), dans lequel la boucle (6) de ligne est soumise à l'influence d'une force de tension due à la gravité qui est dirigée contre le sens d'enroulement du dévidoir secondaire (3), **caractérisé en ce que** pour générer la force de tension, un corps de poids (7) est relié à la boucle de ligne de manière à pouvoir coulisser dans le sens longitudinal de la ligne (7), dans lequel le dévidoir secondaire (3) est enroulé en spirale et le dévidoir principal (2) est enroulé cylindriquement, dans lequel la force de tension tire sur la boucle de ligne (6) de telle manière que la ligne (5) est toujours correctement enroulée en spirale.

2. Agencement de dévidoir (1) selon la revendication 1, **caractérisé en ce qu'**une section (17) de ligne sur le dévidoir secondaire (3) présente une longueur d'enroulement inférieure à une section (16) de ligne sur le dévidoir principal (2), de telle sorte que lors du déroulement du dévidoir principal (2) dans un premier sens de rotation (P1), le sens d'enroulement sur le dévidoir secondaire (3) s'inverse.

3. Agencement de dévidoir (1) selon la revendication 2, **caractérisé en ce que** les diamètres d'enroulement (D1, D2) sont mis au point de telle sorte que, lorsque le dévidoir principal (2) est entièrement enroulé et lorsque le dévidoir principal (2) est entièrement déroulé, la section (17) de ligne est respectivement entièrement enroulée sur le dévidoir secondaire (3).

4. Agencement de dévidoir (1) selon l'une quelconque des revendications 1 à 3, **caractérisé en ce qu'**un entraînement (15) est relié au dévidoir principal (2) et/ou au dévidoir secondaire (3), qui est mis au point pour faire tourner le dévidoir principal (2) et le dévidoir secondaire (3).

5. Agencement de dévidoir (1) selon l'une quelconque des revendications 1 à 4, **caractérisé en ce que** le dévidoir secondaire (3) et le dévidoir principal (2) sont disposés directement l'un à côté de l'autre.

6. Agencement de dévidoir (1) selon l'une quelconque des revendications 1 à 5, **caractérisé en ce que** la ligne (5) est réalisée pour la transmission d'énergie électrique à un consommateur mobile.

7. Agencement de dévidoir (1) selon l'une quelconque des revendications 1 à 6, **caractérisé par** un système de suspension (9) qui est mis au point de telle manière que l'agencement de dévidoir (1) peut être suspendu au-dessus d'un consommateur mobile pour abaisser une extrémité (13) de ligne venant du haut vers le consommateur.

8. Agencement de dévidoir (1) selon l'une quelconque des revendications 1 à 7, **caractérisé en ce que** la ligne (5) est mise au point pour l'acheminement d'énergie et/ou de signaux et/ou de fluides, à savoir de gaz, de liquides, de solides fluides et/ou de mélanges de fluides et/ou de solides.

9. Agencement de dévidoir (1) selon l'une quelconque des revendications 1 à 8, **caractérisé en ce que** la ligne (5) est une ligne hybride avec plusieurs zones de ligne pour différents usages de ligne.

10. Utilisation d'un agencement de dévidoir (1) selon l'une quelconque des revendications 1 à 9 pour un câble électrique pour la charge d'un véhicule électrique.
